# EUROPEAN PATENT SPECIFICATION

(11) **EP 1 942 749 B1**
(45) Date of publication and mention of the grant of the patent: **08.04.2009**
(21) Application number: 06776598.2
(22) Date of filing: 03.08.2006
(51) Int. Cl.: A23L 1/0532, A23L 1/0562, A23C 19/16, A23C 19/076, A23C 19/09, A23C 9/154, A23L 1/187

(54) **CHILLED DESSERT PRODUCT AND METHOD FOR PREPARING SUCH PRODUCT**
GEKÜHLTES DESSERTPRODUKT UND VERFAHREN ZUR HERSTELLUNG SOLCH EINES PRODUKTS
PRODUIT DESSERT REFRIGERE ET PROCEDE POUR LE PREPARER

(30) Priority: 12.10.2005 EP 05077323
(43) Date of publication of application: 16.07.2008
(73) Proprietor: Unilever N.V., 3013 AL Rotterdam (NL); Unilever PLC, London EC4Y 0DY (GB)
(72) Inventor: ELLIOTT, Bronwyn, Bedford Bedfordshire MK44 1LQ (GB)
(74) Representative: Rots, Maria Johanna Francisca
(86) International application number: PCT/EP2006/007720
(87) International publication number: WO 2007/042096

(56) References cited:
- EP-A- 0 714 608
- WO-A-20/04105511
- US-A- 3 582 349
- US-B1- 6 551 637

## Description

The invention relates to a chilled dessert product that comprises a gel part and a fat-based anhydrous coating. The coating may for example consist of chocolate. The invention also relates to a method for preparing such a product.

WO 97/15198 describes chilled food products that comprise two edible materials having different water activities, said edible materials being in contact with and separated by an edible moisture barrier. The first edible material may e.g. consist mostly of fresh cheese. The second edible material may for example be chocolate. The composition to form the filling of the product includes e.g. fresh cheese, sucrose, locust bean gum and flavour. It is cooled and extruded into a strand. The strand is cooled down to -20 or -25°C and cut into pieces. Thereafter the barrier layer and coating are applied.

EP 714 608 describes an enrobed snack product having a fat-based enrobing and a water-continuous filling. A filling mixture based on soft cheese is prepared. The mixture is pasteurized and then cooled to below 10°C, extruded and separated into shaped portions. The portions of filling are enrobed with a fluid fat-based coating material. Before enrobing, the filling portions are preferably frozen, especially to a temperature between -18°C and -35°C.

US 4,795,650 describes a method of making an extruded frozen cheesecake product by combining ingredients to form a stabilized dispersion of cream cheese, sour cream, cream, egg yolk, sweetener, water and flavours which is then cooked, homogenized, aerated and frozen. The frozen mixture is extruded to form a free-standing structure and is further frozen to a stable state.

EP 931 462 and EP 938 847 describe a chilled product with a filling and a coating. The filling and the coating are each dosed into a separate piston chamber. Then the coating is fed to the outer conduit of a concentric nozzle and simultaneously the filling is fed to the central conduit of the nozzle. Then first the coating, then the coating and the filling and then the coating are dosed into a mould. The steps are then repeated for the next chilled product. The filling may for example be a fermented milk product e.g. fresh cheese or yoghurt. The coating may for example be chocolate.

WO 00/76325 discloses a process to increase the shelflife of cottage cheese dessert products. Cottage cheese is mixed with flavouring agents, spices and possibly other ingredients and post-heat treated and cooled to below 10°C in a continuous process using a closed system. The cooled mixture is then forced through a pipeline, in closed system, into the last equipment finishing the technology, where if desired the product is formed, coated, decorated and packed. It may e.g. be formed into bars and dipped into a chocolate bath.

FR 2 544 592 describes petit fours which consist mainly of expanded cream. Each sweet is formed on one of a set of spaced, parallel prongs extending at right angles from a straight support bar. A portion of cream is deposited upon the end of each prong. When the cream is sufficiently set not to run, it is enrobed with an edible coating such as meringue. Once the coating has dried, the sweet is detached from its prong.

FR 2 639 796 describes a composite food product having a core of non-fermented fresh cheese and a protective coating that provides an improved shelf life. The coating may consist e.g. of chocolate. The preparation of the product starts with making fresh cheese by preparing a curd, cutting and draining the whey, filling into moulds and submitting to further draining and turning. The moulding and draining is carried out in a room with controlled atmosphere at a temperature of about 23°C. After 24 hours of draining, the cheeses are demoulded, placed on a grid and dried at below 10°C to a solids content of at least 30%. The shaped portions are heated to 20°C and are enrobed with the coating. The coating is in liquid or paste form and has a temperature of about 30°C. The enrobed centres are cooled to 18°C and packed.

US 3,582,349 describes a process wherein ice cream production equipment can be used outside the season for other food products. The food mix is characterized by an essentially solid state at room temperature and a plastic state above body temperature. The mix typically includes fragile particulate food solids and an uncooked binding agent. It may e.g. be Confectioner's Compound Coating consisting of oil, sugar, milk solids, flavouring and lecithin, combined with expanded crisp rice pieces. The mix is heated and injected into the equipment moulds. After solidification by rapid cooling of the moulds, the moulds are briefly heated and the products are withdrawn from the moulds. The formed products while still cold can be provided with a high gloss dip coating.

Many dessert products with a fat-based anhydrous coating that are not frozen confections, have sub-optimal taste and texture as a result of manufacturing requirements. During the manufacturing of the product often the centre part of the product is frozen. To avoid syneresis upon de-frosting before consumption, modified starch and thickeners are included. Such moisture binders may adversely affect the taste and mouthfeel. Furthermore, freezing is expensive and requires special equipment.

During production, whether or not the composition is frozen, the centre part is often shaped by extrusion. Such preparation methods commonly use pasty compositions for the filling with relatively low moisture contents. Such compositions can be somewhat thick in the mouth and the variety of product that can thus be obtained is limited.

An approach that is sometimes chosen to resolve these difficulties is to refrain from the use of fat-based anhydrous coatings such as chocolate, and to use a layer of e.g. ganache instead. Ganache is a mixture of chocolate and cream and it is soft. It is easier to apply than fat-based coatings are. However, because the material remains soft, for industrially prepared products that must be packed and transported to other locations, the product is prepared in a container and the ganache is usually only applied as a layer on top of the product. That limits the design options for the product, is expensive in the use of packaging material and is sub-optimal from an environmental perspective.

The present invention provides chilled dessert products that have a fat-based, anhydrous coating and that can nevertheless have excellent organoleptic properties. The products can be prepared under normal industrial conditions with high hygiene standards and good reproducibility. Freezing of the product or of part of the product can be avoided.

Accordingly the present invention provides a chilled dessert product that comprises a gel part, which gel part is a moulded gel part, which gel part comprises 40-95 wt% water, 0.05-5 wt% agar, 1-11 wt% protein and 3.5-35 wt% fat, wherein at least 50% of the surface of the gel part is coated with a fat-based anhydrous coating and wherein the dessert product has a temperature of 1-10°C.

The invention also provides a method to prepare the present chilled dessert product, which method comprises the steps of
a) preparing a gel in a mould to provide a moulded gel, which gel comprises 40-95 wt% water, 0.05-5 wt% agar, 1-11 wt% protein and 3.5-35 wt% fat,
b) demoulding the gel to provide a gel part and causing the temperature of the gel part to be 0-25°C,
c) coating at least 50% of the surface of the gel part with a fat-based anhydrous coating material that has a temperature of 20-40°C, and
d) storing the product at 1-10°C.

The use of agar gelling agent allows a firm structure to be obtained quickly that is easy to demould and that has good taste and mouthfeel. The structure can be firm enough to be compatible with fat-based anhydrous coating even though high moisture contents can be used in the gel part.

The gel part of the present product is a moulded gel part, i.e. a part with a gel structure that has been allowed to form under quiescent conditions while the composition is in a mould. A moulded gel structure, as opposed to an extruded structure, allows the use of compositions with relatively high moisture contents and without having to use structurants or moisture binders that would adversely affect the organoleptic properties. By quiescent conditions is meant the absence of any agitation. Agitation encompasses actions such as shearing, stirring, pouring, pumping and shaking. Agitation includes the disruption of cutting and turning deliberately applied in cheese making processes to cause draining of whey. It does not include for example movement of the moulds through a cooling tunnel or their transfer to a cold store.

The gel part does not have to be homogeneous in composition throughout. In a preferred embodiment, the gel part is composed of at least two portions having different compositions. For example, the gel part may include two gelled layers, e.g. a gel layer with vanilla taste on top of a layer with chocolate taste. In such case, each of the gel portions making up the moulded gel part should preferably comprise 40-95 wt% water, 0.05-5 wt% agar, 1-11 wt% protein and 3.5-35 wt% fat. In another preferred embodiment, the gel part includes one or more discrete not-gelled particles. For example, pieces of nuts, chocolate or fruit or lumps of fruit puree, compote, jam, sauce or caramel or a combination of such pieces and / or lumps may be included in the gel part. Such materials can suitably be dosed into the still fluid gel composition that has already been filled into the mould. Alternatively they may be put into the mould before the gel composition is dosed into it. The gel composition and other edible material may also be dosed into the mould simultaneously. In case fluid materials are used, they will be embedded in the gel part formed and thus constitute one or more discrete particles. In case discrete not-gelled particles are present in the gel part, their composition should be left out of consideration with respect to the prescribed amounts of water, agar, protein and fat present in the gel part. In a further preferred embodiment, at least a part of the gel part is aerated.

The gel part contains 0.05-5 wt% agar, preferably 0.08-3 wt% agar, especially 0.1-1 wt% agar. The expression agar includes refined agar materials such as those known as agarose and Danish agar.

The protein in the gel part preferably is milk protein, vegetable protein or a combination thereof, milk protein being particularly preferred. The amount of protein in the gel part is preferably 2-9 wt%, especially 2.5-7 wt%. The gel part may, for example, include fresh cheese as a source of protein, e.g. cream cheese, cottage cheese or the like. Other sources of milk protein that can beneficially be included are milk, cream, sour cream, yogurt, etc. Also powders such as buttermilk powder, skimmed milk powder, whey powder and the like may be included to obtain the desired protein content.

The fat in the gel part preferably is milk fat, vegetable fat or a combination thereof. The amount of fat in the gel part preferably is 5-30 wt%. The moisture content of the gel part is preferably 45-90 wt%. The combined amount of water and fat in the moulded gel part is preferably 50-95 wt%, more preferably 60-90wt%. Part or all of the fat and/or the water may derive from dairy components, notably fresh cheese, milk, cream, sour cream and the like.

At least 50% of the surface of the moulded gel part is coated with a coating. This implies that more than one side of the gel part is coated and consequently that the gel part is demoulded before the coating is applied. The present invention is not concerned with products of which e.g. only the top side is coated or of which only the bottom side consists of a layer of chocolate.

It is not essential that the coating is applied to the gelled material obtained upon demoulding as such. After demoulding, the gelled material may be partitioned into smaller parts. For example the composition to constitute the moulded gel part may be poured into a large, flat container that is a few cm deep, to allow the gel structure to form. After setting of the gel, the container can be turned over to demould the gelled material. That material may then be cut, e.g. with a knife or a water jet or a cut-wire, e.g. into square or rectangular pieces to obtain a number of moulded gel parts, each of which can then be coated.

The coating can e.g. be applied by enrobing, dipping, painting or spraying. Preferably it is applied by enrobing. For example the entire surface of the product except for its bottom can be coated. Alternatively, a bottom coating may be applied as well, e.g. via bottom enrobing. In a preferred embodiment at least 60%, and especially at least 65% of the surface of the gel part is coated. It is particularly preferred that there is no surface of gel part of the dessert product directly exposed to the air. That contributes to securing a good shelflife for the product. Accordingly, in a preferred embodiment, the gel part is wholly enclosed inside the product.,

Usually at least a part of the coating will be in direct contact with the surface of the gel part. However, if so desired a thin layer of other material may be present between the gel part and the coating. For example, a moisture barrier layer may be applied. Alternatively, for example, some pieces of fruit or nut or a layer of jam or fruit coulis or jelly may be placed on top of the moulded gel part before the coating is applied. Indeed in a preferred embodiment, a discrete edible portion is positioned in between the gel part and the coating. However, it is a particular advantage of the present invention that the coating can be applied directly onto the surface of the moulded gel part without causing collapse of the gel structure even though the gel may have a high moisture content. Accordingly, in a preferred embodiment at least 30%, more preferably at least 40% of the surface area of the moulded gel part is in direct contact with the coating.

In the present product at least 50% of the surface of the gel part is coated with the coating. In determining the part of the surface of the gel part that is coated with the coating, the presence of a possible layer of e.g. fruit or moisture barrier in between the gel part and the coating is ignored. If the gel part includes one or more discrete not-gelled particles, the interface between these particles and the gel part is not considered part of the surface of the gel part of which at least 50% should be coated with the coating. Only the outer surface of the gel part is relevant. Thus for example, if the product has a cylindrical shape with a diameter of 6 cm, comprises a base of 1 cm thickness, has a gel part of 2 cm high and has been coated completely in an enrober except that no bottom enrobing has been applied, then 70% of the surface of the gel part has been coated with the coating. This remains the same, if on top of the gel part a layer of e.g. 0.3 cm fruit pulp is added before passage through the enrober. It also stays the same if the gel part includes a cherry but the height of the gel part is still 2 cm. If however, the gel part includes cherries resulting in a height of the gel part of 3 cm, in such case 75% of the surface of the gel part is coated with the coating. If the same product is prepared except that a base of 3 mm thick is applied in stead of 1 cm or no base at all is used, this has no influence on the portion of the surface area of the gel part that is coated with the coating. If bottom enrobing is also applied, then in each of these cases, 100% of the surface of the gel part had been coated with the coating.

The coating is fat-based and anhydrous, i.e. the main component in the coating beside solid matter such as e.g. sugar and/or not-fat cocoa solids, is fat, not water. The coating preferably has a continuous fat phase. Preferably, the water content of the coating is less than 5 wt%. More preferably it is less than 3 wt%, especially less than 2 wt%. Preferably during manufacturing the coating composition contains less than about 0.5 wt% moisture but during storage of the product, some moisture may migrate e.g. from the gel part to the coating.

The coating preferably comprises chocolate or chocolate replacer composition. More preferably the coating consists of chocolate. The chocolate may be dark chocolate, milk chocolate or white chocolate. The chocolate may also be flavoured chocolate, e.g. chocolate containing some strawberry or hazelhut flavour. Chocolate and materials similar to chocolate have a continuous fat phase. The coating may also be a chocolate replacer composition, e.g. a couverture or a supercoating or another coating. Such compositions may include as a partial or complete replacer of cocoa butter, cocoa butter equivalent or lauric or non-lauric cocoa butter replacer. The coating may for example include pieces of nuts, raisins, biscuits and/or dried fruit or the like. However, any materials included in the coating should have a low moisture content because the anhydrous character of the coating should not be affected.

Coatings as described above are well known in the confectionery industry and they can be applied for the present invention. Other fat-based anhydrous coatings may also be applied for the present invention. Preferably the coating has a fat content of 20-50 wt%. The fat contained in the coating preferably has a relatively high solid fat content at 15°C. The solid fat content can suitably be measured by NMR as is commonly applied in the confectionery industry. The solid fat content at 15°C preferably is at least 50%, more preferably it is at least 60%.

Preferably, the coating comprises 25-40 wt% fat, 35-60 wt% sugar, optionally up to 25 wt% not-fat cocoa solids, optionally up to 25 wt% not-fat milk solids and optionally up to 5 wt% other ingredients e.g. lecithin, vanilla and/or hazelnut oil. Cocoa solids may be included in the coating in the form of e.g. cocoa powder or cocoa mass. Cocoa mass, or cocoa liquor, comprises cocoa butter and not-fat cocoa solids in a weight ratio of about 1:1. An example of a composition that can be used as coating is plain chocolate consisting of about 40 wt% cocoa mass, 12 wt% cocoa butter, 48 wt% sugar and 0.4 wt% lecithin.

The product is a chilled product. Its temperature should be kept at 1-10°C. A higher temperature would cause a too short shelflife. A lower temperature during extended storage, because of the inevitable temperature fluctuations in storage conditions, could cause freezing of the product, which could lead to substantial damage during subsequent de-frosting. Preferably the product temperature is 3-7°C during storage. To have an optimal taste and texture it may be beneficial to cause the product to have a somewhat higher temperature at consumption. Depending on the product design, the product may be at its best for consumption at a temperature of, for example, 12-17°C.

In a further preferred embodiment of the dessert product, the gel part sits on an edible base. For example, the base may be a biscuit base or a cake layer. Such product can conveniently be prepared by first filling the composition that is to constitute the gel part in a mould. The temperature may be for example 85 or 90°C. The composition may then be cooled down to cause it to gel. Before, during or after the cooling and consequential gelling, the base material may be placed on top of the gel composition. After the gel has set, the mould is turned over and e.g. tapped to release the intermediate product from the mould. This intermediate product then comprises the base material at the bottom with the moulded gel part sitting on top thereof. This can then be brought to the required temperature in step b of the present method.

In step b of our method, the temperature of the intermediate product is controlled to ensure that the temperature of the gel part is 0-25°C. The temperature of the gel part in step b, before the coating is applied, preferably is 1-17°C, especially 2-13°C. Then the coating can be applied. It is preferably ensured that the temperature of the gel part immediately before the coating is applied, is 0-25°C, preferably 1-17°C, especially 2-13°C. The temperature of the gel part can suitably be measured about 1 cm under the surface of the gel part. The coating composition has a temperature of 20-40°C, preferably 25-35°C. It is further preferred that the temperature of the gel part being coated is lower than the temperature of the coating composition during the coating. Coating can e.g. be done by enrobing, dipping, painting, pouring or spraying. For example, the moulded gel part may be placed on a tray made of metal wire that is dipped into a bath of fluid coating material. Alternatively, coating in liquid condition may be sprayed onto the gel part or it may be poured over it. Coating composition may be applied onto the gel part by painting it on with a brush. Preferably however, the coating is applied by means of enrobing. Enrobing is a commonly used coating technique in the confectionery industry. Depending on the composition, the coating composition may be tempered before it is applied. Choosing the temperature of the coating composition, and/or tempering it if that is desirable in view of the composition used, are well known practices in the confectionery industry. The product is stored at 1-10°C.

In the present method it is preferably avoided that the gel part, after the gel structure has been formed in step a, is frozen. The temperature of the gel part is kept at preferably at least 0°C, more preferably at least 1°C. We have found that freezing and subsequent defrosting may cause syneresis and/or loss of structure, which would adversely affect the product quality.

It is an advantage of the present invention that freezing can be avoided even though the moisture content of the gel part can be high. This allows the absence of moisture binders that would otherwise be required to avoid syneresis upon de-frosting of the product before consumption. Nevertheless, small amounts of such moisture binders need not have strong adverse effects and therefore can be tolerated. Accordingly, the gel part may include small amounts of modified starch, corn flour, maize starch and/or rice starch. However, if such material is present at all, the amount thereof in the gel part is preferably less than 1 wt%, more preferably less than 0.5 wt%. Similarly, gums are often included as moisture binder in dessert gels to address the syneresis that would occur after defrosting a frozen gel portion. For the present invention, xanthan gum, cellulose gum e.g. CMC, guar gum and/or locust bean gum, if present at all, are present in a combined amount of preferably less than 0.5 wt%, more preferably less than 0.2 wt% of the gel part.

The presence of agar gelling agent is essential to achieve the benefits of our invention. However, this does not mean that other gelling agents necessarily cause adverse effects in the present product. Accordingly, small amounts of other gelling agents may be used in combination with agar. For example, small amounts of kappa and/or iota carrageenan, gellan and/or gelatin may be included in the gel part. However, the amount of gelling agent other than agar in the gel part is preferably not more than 0.2 wt%, more preferably not more than 0.1 wt%. Gels may also be based on other materials than these so-called gelling agents that form gels at low concentrations, e.g. egg yolk protein and starch. Small amounts of such materials can also be tolerated. Preferably, egg yolk, if present at all in the gel part, constitutes less than 2 wt%, especially less than 1 wt% of the gel part. Starch if present at all, constitutes preferably less than 1 wt% of the gel part.

The composition used to constitute the gel part of the present product can suitably be the kind of composition typically used to prepare e.g. the gel part of cheesecake, provided the indicated composition requirements are met. In a preferred embodiment, the gel part is prepared using a sheared agar gel that comprises at least a portion of the protein to be included in the gel part. We have found that the use of such sheared gel to prepare the chilled dessert product results in better taste and mouthfeel. A sheared gel is a gel that has been sheared during setting of the gel to provide a gel in a mobile condition. Examples of sheared gels that can be used in the present invention are given in WO 2004/105499, WO 2004/105509, WO 2004/105510, WO 2004/105511 and WO 2004/105512.

Throughout this specification, except in relation to surface area, all parts, percentages and ratios are by weight unless otherwise indicated. The words "water" and "moisture" are used interchangeably. Except in the operating and comparative examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Example 1

A series of gel compositions having the composition of Table 1 were prepared.

**Table 1**

| Ingredient | Wt% |
|---|---|
| American full fat soft cheese | 28.3 |
| Standard full fat soft cheese | 27.75 |
| Double cream | 1.35 |
| Skimmed milk | 10.49 |
| Water (balance to 100%) | 15.08-15.03 |
| Sugar | 11.1 |
| Vanilla essence | 0.11 |
| Soured cream | 5.54 |
| Gelling agent (see Table 2) | 0.28-0.33 |

The type and amount of gelling agent used were as listed in Table 2.

**Table 2**

| Example | Amount (wt%) | Gelling agent |
|---|---|---|
| E1 | 0.28 | Agar |
| C1a | 0.28 | Kappa-carrageenan |
| C1b | 0.33 | Iota-carrageenan |
| C1c | 0.33 | Gellan |
| C1d | 0.20+ | Xanthan+ |
| | 0.08 | Locust bean gum |

For each composition the preparation was as follows. The liquid ingredients were placed in a Hobart mixer. The gelling agent and sugar were mixed and cold dispersed in the liquid mixture. Mixing was continued for 5 minutes. The mixture and the remaining solid ingredients were transferred to a pan and the composition was heated to 90°C. It was kept at this temperature for 2 minutes whilst it was stirred continuously. For demoulding trials, the composition was then poured into test containers with a volume of about 150 ml. The containers had a slit cut in the bottom to aid demoulding. Some further containers were filled to provide samples for hardness measurements and assessment by a taste panel. In addition, for enrobing trials, cylindrical moulds having a diameter of 6.5 cm and a height of 4 cm, that contained a biscuit base of about 15 g, were filled with about 85 g each of gel composition. The samples were covered with cling film and stored in the refrigerator for 24 hours at about 5°C.

For the demoulding assessment, each container was turned upside down on a plate. The slit was opened to release the vacuum. The container was tapped sharply (repeatedly if necessary) to cause the gel part to be demoulded. The weight of product remaining in the container was measured as an indication of completeness of demoulding. The samples were tasted to assess organoleptic properties. The hardness of the samples was measured with a Stevens Texture analyser at 5°C using a 40° cone as measuring device. The measurement depth was 10 mm and the cone speed was 1 mm/s. The required load was recorded in g/cm. For each sample 2 measurements were made and the average calculated.

For enrobing, the intermediate products were pushed out of the cylindrical moulds from the bottom side. They comprised a moulded gel part sitting on a biscuit base. The samples were placed on the metal wire conveyer belt of an enrober and passed through a chocolate curtain and into the cooling tunnel. The samples exiting from the cooling tunnel were packed and stored at 5°C. About 70% of the surface of the gel part was coated with chocolate. The gel part was wholly enclosed inside the product.

The chocolate composition used as coating was milk chocolate. The temperature of the chocolate tank was set at 30.0°C. The surface temperature of the gel part of the samples being enrobed was 5-7°C. The blower and shaker of the enrober were switched on to avoid a too thick chocolate coating being formed. Bottom enrobing was not applied. The temperature setting in the cooling tunnel was 2°C. The residence time in the tunnel was 6 minutes and 30 seconds. The amount of coating per sample was about 20 g. The enrobed samples were visually assessed after 1, 5 and 10 days.

Each of the gel compositions contained 0.3 wt% gelling agent, 5.4 wt% protein, 19 wt% fat and 60 wt% moisture. The demoulding evaluations were made for each composition on 2 samples. For the samples E1 and C1d, the demoulding was complete with the amount of product remaining attached to the mould being less than 0.2 wt% in each case. The demoulding of all other samples was much less good. For the samples C1b, 2 wt% and 9 wt% of the sample remained attached to the container. The other samples did not properly demould at all with more than 20 wt% of the sample remaining in the container. The samples C1c were very hard to remove from the containers also. Regarding taste, samples E1 and C1a gave the best results. Sample C1d was distinctly disliked. The structure was very chewy and rubbery and the sample seemed to have very little taste or flavour. Sample C1d also performed poorly in the enrobing trials. The coating was irregular and flaked off easily. It did not look apetizing. Samples C1b and C1c suffered from moisture seepage out of the product causing sticky contamination of the carton pack. This does not look good and it is also a concern from a microbiological perspective. The base of samples C1b and C1c had also become rather moist. Samples E1 and C1a performed well in the enrobing trials and had overall comparable results. Overall, only example E1 (agar) gave acceptable results.

### Example 2

Example 1 was repeated except that the overall recipe of the gel part composition was as given in table 3. The samples are numbered correspondingly to example 1 as E2, C2a-C2d, depending on the gelling agent. Agar and kappa-carrageenan were used at 0.32 wt%; iota-carrageenan and gellan were used at 0.38 wt%; in sample C2d 0.23 wt% xanthan and 0.1 wt% locust bean gum were used.

**Table 3**

| Ingredients | Wt% |
|---|---|
| American full fat soft cheese | 32.84 |
| Double cream | 1.57 |
| Skimmed milk | 12.17 |
| Water (balance to 100%) | 17.49-17.44 |
| Sugar | 14 |
| Vanilla essence | 0.1 |
| Whipping cream | 21.5 |
| Gelling agent | 0.32-0.38 |

Each of the gel compositions contained besides 0.3 or 0.4 wt% gelling agent as indicated above, 3.7 wt% protein, 20 wt% fat and 59 wt% water. In the demoulding trials, for each of the samples E2 (agar), C2c (gellan)and C2d (xanthan/LBG) the amount of product remaining in the mould was less than 0.4 wt%. However, one of the samples of C2d was very hard to get out of the mould. The samples of C2a and C2b (kappa and iota carrageenan, respectively) demoulded poorly with more than 10 wt% of the product remaining stuck in the mould.

The taste panel noted that there was relatively little difference in organoleptic properties between each of these samples and the corresponding sample of example 1. The taste and texture of samples E2 and C2a were the best. Sample C2d was strongly disliked; the texture was chewy and rubbery and also the taste was judged to be very poor. Sample C2c was found too soft to cut and grainy. Most panelists were critical about the taste also. The results of the enrobing trials were directionally similar to those for the corresponding samples of example 1. The results were good for the samples with agar and kappa-carrageenan. They were less good for gellan and especially iota carrageenan. The enrobing results for xanthan / LBG were very poor. Overall, only sample E2 was found to give acceptable results.

### Example 3

Example 1 was repeated except that in each case first a sheared gel was prepared having a composition as shown in table 4. The samples are numbered correspondingly to example 1 as E3, C3a-C3d, depending on the gelling agent. Agar (E3) and kappa-carrageenan (C3a) were used at 0.50 wt%; iota-carrageenan (C3b) and gellan (C3c) were used at 0.60 wt%; in sample C3d, 0.35 wt% xanthan and 0.15 wt% locust bean gum were used in the sheared gel.

**Table 4**

| Ingredient | Wt% |
|---|---|
| American full fat soft cheese | 51 |
| Double cream | 2.44 |
| Skimmed milk | 18.9 |
| Water (Balance to 100%) | 27.16-27.06 |
| Gelling agent | 0.5-0.6 |

The sheared gels were prepared as follows: The liquid ingredients were combined in a 20 kg tank. The gelling agent was cold dispersed in the liquid whilst mixing with a high shear Silverston mixer for 5 minutes. The cream cheese was added and the mixture heated to 90°C. The composition was kept at this temperature for 2 minutes while shearing with the Silverston was continued. The mixture was then transferred in a Stefan mixer and cooled under shear to below 15°C. The sheared gel obtained was transferred into a container and stored in a refrigerator until it was used further.

With each sheared gel a gel composition was prepared as shown in table 5. The ingredients were combined in a pan. The mixture was heated while stirring it until the temperature reached 85°C. The composition was then poured in the containers/moulds and further the procedure of example 1 was followed.

**Table 5**

| Ingredient | Wt% |
|---|---|
| Sheared gel | 55.5 |
| Sugar | 11.1 |
| Vanilla essence | 0.11 |
| Standard full fat soft cheese | 27.75 |
| Soured cream | 5.54 |

The type and amount of gelling agent in the gel part was the same in each case as in the corresponding samples of example 1. Also the protein, fat and moisture contents were the same as in example 1.

All samples were notably softer than the corresponding samples of example 1. Overall the taste and mouthfeel were judged to be clearly better than those of the corresponding samples of example 1. However, only the sample made with agar, sample E3, had good demoulding properties. For samples C3a, C3b and C3c the amount of product remaining in the mould was more than 10 wt%. For sample C3d there was no significant amount of product left in the mould. However, it was very difficult to get the product out of the container. For sample C3d, the panel was critical about the organoleptic properties. For the enrobing trials only the samples with agar gave acceptable results. Overall, the sample based on agar was clearly the best.

### Example 4

Example 2 was repeated except that the sheared gels described in example 3 were used to prepare the gel parts having the composition shown in table 6. For the preparation of these gel parts from the sheared gels, the same process as described in example 3 was used. The samples are numbered correspondingly to example 2 as E4, C4a-C4d, depending on the gelling agent.

**Table 6**

| Ingredients | Wt% |
|---|---|
| Sheared gel | 64.4 |
| Sugar | 14 |
| Vanilla essence | 0.1 |
| Whipping cream | 21.5 |

The type and amount of gelling agent in the gel part was the same in each case as in the corresponding samples of example 2. Also the protein, fat and moisture contents were the same as in example 2.

All samples were notably softer than the corresponding samples of example 2. The one exception was sample C4a, which was similarly hard as sample C2a. (These samples with kappa-carrageenan were the hardest of all of examples 2 and 4.) Overall the taste and mouthfeel were judged to be clearly better than those of the corresponding samples of example 2. However, only the sample made with agar, sample E4, had good demoulding properties. For samples C4a, C4b and C4c the amount of product remaining in the mould was more than 9 wt%. For sample C4d there was no significant amount of.product left in the mould. However, it was very difficult to get the product out of the container. For sample C4d, the panel was critical about the organoleptic properties. The enrobing trials showed the best results for the samples based on agar. The results for the samples with gellan and with xanthan/LBG were very poor. Overall, the sample based on agar was clearly the best.

### Comparative example

Several commercial gelatin-based chilled dessert products in containers were purchased from the local shops. They were kept in the refrigerator at about 5°C until they were used. They were then demoulded on a plate. Milk chocolate was heated to melt it. The temperature was adapted to 30°C and the chocolate was poured over the dessert products to provide them with a thin layer of chocolate coating. The products were then placed in the refrigerator at 5°C to allow the chocolate to set. However, upon application of the coating, the shape of the products changed and liquid leached out of the product. Good coating of the products was not achieved. On the inside of the chocolate layer moisture droplets had formed. The product looked unappetizing and was not suitable for serving. We hypothesized that the gel structure collapsed as a result of the contact with the warm chocolate composition.

### Example 5

A coated vanilla cheesecake dessert product was made, composed of an edible base, a gel part and a coating using the materials shown in Table 7.

**Table 7**

| Components | pbw | pbw |
|---|---|---|
| Base made of | | 15 |
| • Biscuit base mix | 11 | |
| • Butter | 4 | |
| Gel part made of | | 70 |
| • Agar sheared gel of example E3 | 45 | |
| • Sugar | 9 | |
| • Vanilla essence | 1 | |
| • Cream cheese | 15 | |
| Milk chocolate | | 20 |

The butter was melted and mixed with the biscuit base mix. A layer of the mixture was filled in mould rings with a diameter of about 6.5 cm and a height of about 3.5 cm that were placed on greaseproof paper.

The components to constitute the gel part were combined, stirred, heated to 85°C and poured onto the base layer in the rings. The filled moulds were put in the refrigerator at about 5°C and left overnight. Then the samples were pushed out of the mould from the bottom side to provide an intermediate product.

The chocolate to be used as coating was melted and its temperature was adapted to about 30°C. It was poured over the intermediate product giving a layer of about 1-1.5 mm thick. After the coating had solidified, the products were placed in the refrigerator at 5°C. The gel part included 0.3 wt% agar, 4.3 wt% protein, 16 wt% fat and 62 wt% moisture. About 70% of the surface of the moulded gel part was coated with the chocolate coating. The gel part was wholly enclosed inside the product. The products were judged to be very attractive dessert products.

### Example 6

A chocolate cheesecake dessert product was prepared similarly to example 5 except that the materials shown in table 8 were used.

**Table 8**

| Components | pbw | pbw |
|---|---|---|
| Base made of | | 15 |
| • Biscuit base mix | 10 | |
| • Butter | 4 | |
| • Chocolate | 1 | |
| Gel part made of | | 50 |
| • Agar sheared gel of example E3 | 27 | |
| • Sugar | 9 | |
| • Double cream | 5 | |
| • Chocolate | 9 | |
| Ganache | | 20 |
| Coating made of | | 20 |
| • Plain chocolate | 12 | |
| • Hazelnut pieces | 8 | |

The product was prepared similarly as in example 5. The chocolate and the butter were melted and mixed with the biscuit base mix. The resulting mixture was filled in the mould. A lump of ganache was put on the center of the base. The hot gel composition was first poured into the mould around the ganache and then covered it. After the gel had set, the lump of ganache constituted a discrete not-gelled particle in the gel part. The hazelnut pieces were mixed with the melted chocolate and thus became part of the coating. The gel part, excluding the ganache, contained 0.3 wt% agar, 3.1 wt% protein, 21 wt% fat and 47 wt% water. This dessert product too was much appreciated.

### Example 7

A double layered dessert product was prepared similar to those in examples 5 and 6, using the materials shown in table 9.

**Table 9**

| Components | pbw | pbw |
|---|---|---|
| Base made of biscuit base mix | | 15 |
| Gel part 1 made of | | 30 |
| • Agar sheared gel of example E3 | 17 | |
| • Sugar | 4 | |
| • Double cream | 9 | |
| Gel part 2 made of | | 40 |
| • Agar sheared gel of example E3 | 21 | |
| • Plain chocolate | 7 | |
| • Sugar | 7 | |
| • Double cream | 5 | |
| Plain chocolate | | 20 |

The product was prepared corresponding to the method described in examples 5 and 6, mutatis mutandis. In this case, the two gel part compositions were prepared separately. First gel part 1 composition was poured onto the biscuit base. After the composition had started to set, the gel part 2 composition was carefully poured on top of it. Thus a product with two gel parts with distinct compositions was obtained. Gel part 1 included 0.3 wt% agar, 2.6 wt% protein, 23 wt% fat and 58 wt% moisture. Gel part 2 contained 0.26 wt% agar, 3.1 wt% protein, 21 wt% fat and 48 wt% moisture. This dessert product was also well received.

### Example 8

A chocolate and raspberry product was made in a manner similar to that of example 6, using the materials shown in table 10. The raspberry coulis comprised crushed raspberries and sugar in a weight ratio of about 3:1.

**Table 10**

| Components | pbw | pbw |
|---|---|---|
| Base made of | | 15 |
| • Biscuit base mix | 10 | |
| • Butter | 4 | |
| • Chocolate | 1 | |
| Gel part made of | | 55 |
| • Agar sheared gel of example E3 | 32 | |
| • Sugar | 7 | |
| • Double cream | 5 | |
| • White Chocolate | 11 | |
| Raspberry coulis | | 15 |
| Coating of plain chocolate | | 20 |

The gel part excluding the coulis contained 0.3 wt% agar, 3.3 wt% protein, 22 wt% fat and 50 wt% water. This was also a very good dessert product.

### Example 9

A hazelnut and caramel dessert product was made similarly to the product of example 8. In the base, no chocolate was used and 1 pbw more biscuit base mix was used. The gel composition contained no chocolate, and instead 3 pbw more of the sheared gel, 4 pbw more of the double cream and 4 pbw of hazelnut paste were used. Instead of the raspberry coulis, caramel was used. The coating was made of milk chocolate. The gel part excluding the caramel contained 0.3 wt% agar, 2.9 wt% protein, 18 wt% fat and 62 wt% moisture. Another good product was obtained.

### Example 10

Another product, white chocolate and strawberry, was made similar to example 8. In this case the base consisted solely of base mix. The gel part composition did not include chocolate and it contained 1 pbw less sugar. Instead it contained 7 pbw more double cream and 5 pbw of strawberry paste. Strawberry coulis was used in stead of raspberry coulis. The coating was made of white chocolate. The gel part excluding the coulis contained 0.3 wt% agar, 2.6 wt% protein, 21 wt% fat and 61 wt% water. This product too was much appreciated.

## Claims

1. A chilled dessert product that comprises a gel part, which gel part is a moulded gel part, which gel part comprises 40-95 wt% water, 0.05-5 wt% agar, 1-11 wt% protein and 3.5-35 wt% fat, wherein at least 50% of the surface of the gel part is coated with a fat-based anhydrous coating and wherein the dessert product has a temperature of 1-10°C.

2. A product according to claim 1 wherein the coating has a fat content of 20-50 wt%.

3. A product according to claim 1 or claim 2 wherein the fat of the coating has a solid fat content at 15°C of at least 50%.

4. A product according to any one of claims 1-3 wherein the coating consists of chocolate.

5. A product according to any one of claims 1-4 wherein the gel part sits on an edible base.

6. A product according to any one of claims 1-5 wherein at least a part of the gel part is aerated.

7. A product according to any one of claims 1-6 wherein the gel part is composed of at least two portions having different compositions.

8. A product according to any one of claims 1-7 wherein the gel part includes one or more discrete not-gelled particles.

9. A product according to any one of claims 1-8 that comprises a discrete edible portion positioned in between the gel part and the coating.

10. A product according to any one of claims 1-9 wherein the gel part is wholly enclosed inside the product.

11. A method for preparing a chilled dessert product according to any one of claims 1-10 comprising the steps of
a. preparing a gel in a mould to provide a moulded gel, which gel comprises 40-95 wt% water, 0.05-5 wt% agar, 1-11 wt% protein and 3.5-35 wt% fat,
b. demoulding the gel to provide a gel part and causing the temperature of the gel part to be 0-25°C,
c. coating at least 50% of the surface of the gel part with a fat-based anhydrous coating material that has a temperature of 20-40°C, and
d. storing the product at 1-10°C.

12. A method according to claim 11 wherein before step c the gel part of step b is partitioned into smaller parts.

## Patentansprüche

1. Gekühltes Dessertprodukt, das einen Gelteil umfasst, wobei der Gelteil ein geformter Gelteil ist, der Gelteil 40-95 Gewichts-% Wasser, 0,05-5 Gewichts-% Agar, 1-11 % Protein und 3,5-35 Gewichts-% Fett umfasst, wobei wenigstens 50 % der Oberfläche des Gelteils mit einer wasserfreien Beschichtung auf Fettbasis beschichtet sind und wobei das Dessertprodukt eine Temperatur von 1-10 °C hat.

2. Produkt gemäß Anspruch 1, wobei die Beschichtung einen Fettgehalt von 20-50 Gewichts-% hat.

3. Produkt gemäß Anspruch 1 oder Anspruch 2, wobei das Fett der Beschichtung einen Gehalt an festem Fett bei 15 °C von wenigstens 50 % hat.

4. Produkt gemäß einem der Ansprüche 1-3, wobei die Beschichtung aus Schokolade besteht.

5. Produkt gemäß einem der Ansprüche 1-4, wobei der Gelteil auf einer essbaren Basis sitzt.

6. Produkt gemäß einem der Ansprüche 1-5, wobei wenigstens ein Teil des Gelteils belüftet ist.

7. Produkt gemäß einem der Ansprüche 1-6, wobei der Gelteil aus wenigstens zwei Bereichen, die unterschiedliche Zusammensetzungen haben, besteht.

8. Produkt gemäß einem der Ansprüche 1-7, wobei der Gelteil ein oder mehrere diskrete nicht-gelierte Partikel umfasst.

9. Produkt gemäß einem der Ansprüche 1-8, das einen diskreten essbaren Bereich umfasst, der zwischen dem Gelteil und der Beschichtung angeordnet ist.

10. Produkt gemäß einem der Ansprüche 1-9, wobei der Gelteil vollständig im Inneren des Produkts eingeschlossen ist.

11. Verfahren zur Herstellung eines gekühlten Dessertprodukts gemäß einem der Ansprüche 1-10, umfassend die Schritte:
a. Herstellen eines Gels in einer Form, um ein geformtes Gel bereitzustellen, wobei das Gel 40-95 Gewichts-% Wasser, 0,05-5 Gewichts-% Agar, 1-11 Gewichts-% Protein und 3,5-35 Gewichts-% Fett umfasst;
b. Entnehmen des Gels aus der Form unter Bereitstellen eines Gelteils und Bewirken, dass die Temperatur des Gelteils 0-25 °C beträgt;
c. Beschichten wenigstens 50 % der Oberfläche des Gelteils mit einem wasserfreien Beschichtungsmaterial auf Fettbasis, das eine Temperatur von 20-40 °C hat, und
d. Lagern des Produkts bei 1-10 °C.

12. Verfahren gemäß Anspruch 11, wobei der Gelteil von Schritt b vor Schritt c in kleinere Teile geteilt wird.

## Revendications

1. Produit de type dessert réfrigéré qui comprend une partie de gelée, laquelle partie de gelée est une partie moulée, laquelle partie de gelée comprend de 40 à 95 % en poids d'eau, de 0,05 à 5 % en poids d'agar-agar, de 1 à 11 % en poids de protéines et de 3,5 à 35 % en poids de matières grasses, dans lequel au moins 50 % de la surface de la partie de gelée est enrobée avec un enrobage anhydre à base de matières grasses et dans lequel le produit de type dessert a une température allant de 1 à 10°C.

2. Produit selon la revendication 1, dans lequel l'enrobage a une teneur en matières grasses allant de 20 à 50 % en poids.

3. Produit selon la revendication 1 ou la revendication 2, dans lequel les matières grasses de l'enrobage ont une teneur en corps gras solides à 15°C d'au moins 50 %.

4. Produit selon l'une quelconque des revendications 1 à 3, dans lequel l'enrobage est constitué de chocolat.

5. Produit selon l'une quelconque des revendications 1 à 4, dans lequel la partie de gelée repose sur une base comestible.

6. Produit selon l'une quelconque des revendications 1 à 5, dans lequel au moins une partie de la partie de gelée est aérée.

7. Produit selon l'une quelconque des revendications 1 à 6, dans lequel la partie de gelée est composée d'au moins deux parties ayant des compositions différentes.

8. Produit selon l'une quelconque des revendications 1 à 7, dans lequel la partie de gelée comprend une ou plusieurs particules discrètes non gélifiées.

9. Produit selon l'une quelconque des revendications 1 à 8, qui comprend une partie discrète comestible disposée entre la partie de gelée et l'enrobage.

10. Produit selon l'une quelconque des revendications 1 à 9, dans lequel la partie de gelée est totalement enclose à l'intérieur du produit.

11. Méthode pour préparer un produit de type dessert réfrigéré selon l'une quelconque des revendications 1 à 10 comprenant les étapes consistant à :
a) préparer une gelée dans un moule afin d'obtenir une gelée moulée, laquelle gelée comprend de 40 à 95 % en poids d'eau, de 0,05 à 5 % en poids d'agar-agar, de 1 à 11 % en poids de protéines et de 3,5 à 35 % en poids de matières grasses ;
b) démouler la gelée afin d'obtenir une partie de gelée et faire que la température de la partie de gelée se situe entre 0 et 25°C ;
c) enrober au moins 50 % de la surface de la partie de gelée avec un ingrédient d'enrobage anhydre à base de matières grasses qui possède une température allant de 20 à 40°C ; et
d) conserver le produit entre 1 et 10°C.

12. Méthode selon la revendication 11, dans lequel avant l'étape c, la partie de gelée de l'étape b est divisée en plus petits morceaux.
